# EUROPEAN PATENT APPLICATION

(11) **EP 0 524 384 A1**
(43) Date of publication of application: **27.01.1993**
(21) Application number: 92107793.9
(22) Date of filing: 08.05.1992
(51) Int. Cl.: H02K 23/66, H02K 11/00

(54) **An electric motor including a connectable-disconnectable encoder comprising a hall-effect sensor arranged between the field poles of the stator**

(30) Priority: 26.07.1991 IT MI910682 U
(71) Applicant: RICERCA ELETTROMECCANICA S.r.l, I-20122 Milano (IT)
(72) Inventor: Bianco, Carlo, I-20122 Milano (IT)
(74) Representative: La Ciura, Salvatore

(57) **Abstract**

An electric motor (1) is coupled to a simplified encoder device using a Hall-effect sensor arranged in the inside of the motor (1) between the field poles (2) of the stator so as to utilize the magnetic lines of force from the poles of the rotor (3) for energizing and deenergizing the sensor, thereby to produce a series of pulses which are proportional in number to the number of revolutions of the motor (1).

## Description

This invention relates to an electric motor including a simplified type of encoder device consisting of a Hall-effect sensor arranged in the inside of the motor between the field poles of the stator, so as to utilize the magnetic flux from the field poles of the rotor to generate a series of pulses proportional to the number of revolutions of the motor.

By the solution to be described herein below, it is possible to apply the transducer also to conventional motors without any significant change thereto; a motor-encoder unit can thus be obtained which is substantially reduced in size with respect to corresponding devices known.

Applications requiring that a transducer, such for example as an encoder, should be coupled to an electric motor in order to accurately control rotation thereof, are becoming more and more large in number.

Many types of encoders are known and include in particular the Hall-effect encoder from which a series of pulses are emitted as a function of the variations in a magnetic field acting upon the device.

In a practical application to an electric motor, a ring magnet including a number of magnetized sectors is mounted to the motor shaft and a sensor is arranged in proximity to the annular magnet. During rotation of the motor, the sensor is affected by the fields generated by the magnetized sectors and produces a series of pulses that are proportional to the number of magnetized sectors and the number of revolutions of the motor. These signals are transmitted to a known type of electronic device by which the signals are processed so as to enable a speed or a position of the motor to be controlled.

However, this solution has some disadvantages that may be summarized as follows:
increased cost due to the fact that the magnet and associated control circuits require use to be made of a nonstandardized motor shaft;
increased size due to the dimensions of the magnet and the sensor support with their associated electronic control components;
complex circuitry resulting from increased number of connecting leads that are required.

As a result of the increased cost and increased size referred to above, difficulties of application arise in all of such segments of the industry, such for example as the automotive or the small electro-domestic appliance industry, where bidirectional motors provided with position control are to be used and where there is very little space available.

The above difficulties can be overcome by this invention which provides an electric motor including an encoder consisting of a Hall-effect sensor arranged between the field poles of the stator, this sensor being mounted to a plate integral with a cover of the motor which can thus be provided with a transducer without increasing the size of the motor and without requiring any modification to the motor components.

In this manner, a connectable-disconnectable encoder unit is obtained which permits a standard motor to be converted to a combined motor and encoder without increasing overall dimensions thereof.

This invention will now be described in more details herein below, reference being made, by way of example only, to the accompanying drawings, wherein:
Figure 1 is a schematic view of a motor according to this invention in open position, and
Figure 2 shows the circuit diagram of a motor provided with a sensor according to this invention.

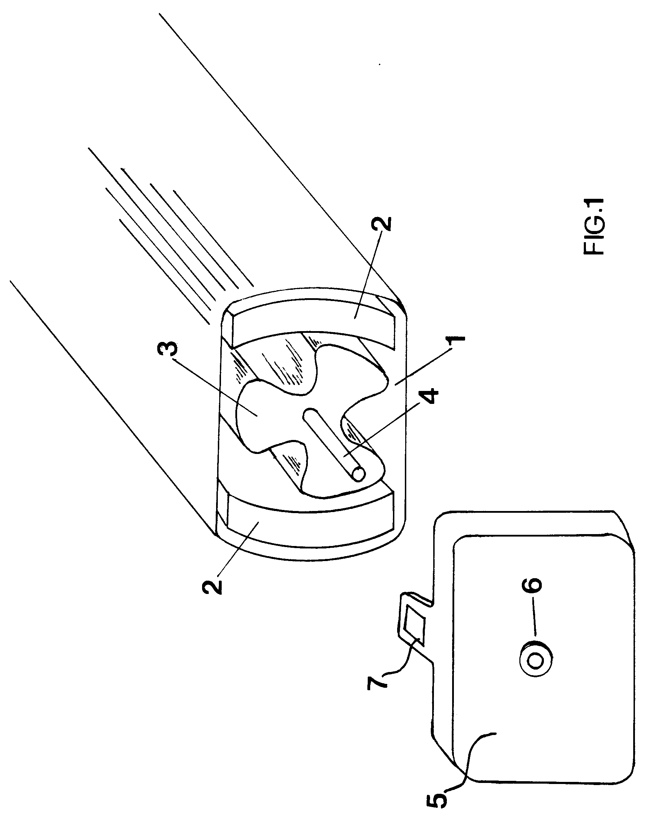

With reference to figure 1, there is shown, by 1, a motor frame having the field poles 2 of the stator fitted to the inside wall of the frame. Shown by 3 is a rotor mounted on a rotor shaft 4.

The motor is closed at both ends by cover means 5 (only one shown in the drawing) provided with openings 6 and associated bushing for supporting the rotor shaft 4.

One said cover 6 has a projecting portion 7 so formed on it as to fit into the space between the field poles 2 in the inside of the motor.

A printed circuit board and the related plastic support are fixed to the projection 7 and on this printed circuit board there is mounted a Hall-effect sensor with the associated circuit for maintaining a correct polarity.

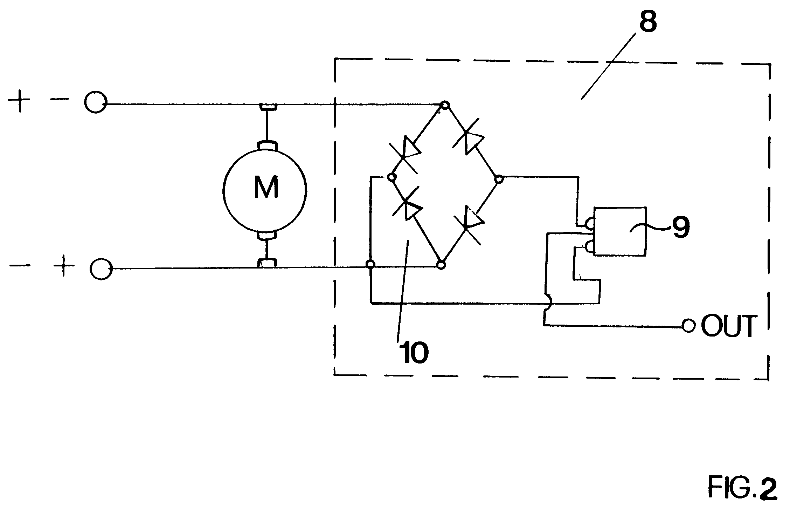

Figure 2 schematizes a printed circuit board indicated by reference numeral 8 and carrying a Hall-effect sensor 9 and diodes 10.

This solution can be applied to any motor to convert it to a combined motor and encoder unit without any significant change being to be made to the original motor.

It is, in fact, sufficient to have said one cover 5 formed with the projection 7 on which the printed circuit and the associated sensor are mounted with no further provision being then needed.

The variation in magnetic flux to be sensed as a function of the number of revolutions of the motor is here provided by the field poles of rotor 3 which, upon alternately passing in proximity to the sensor cause a number of pulses to occur at the output with the pulses being proportional to the number of field poles of the rotor and the number of revolutions of the motor.

Thus, it becomes possible to couple a transducer to an electric motor in order to obtain a combined motor and encoder unit, without increasing the size of the motor nor modifying it in any significant manner.

This solution has technical and cost-effective advantages of interest in that:
any standard motor can be utilized without the length of the motor shaft having to be changed;
use of a polarized magnet can be avoided since the field poles of the rotor will perform the same function;
use of a circuit for maintaining correct polarity associated to the Hall-effect sensor makes for a substantially simplified electrical installation, reducing to merely three cables in total the input and the output of the motor and encoder unit;
it should also be apparent that application to an existing motor will be a very simple operation: it is only necessary to replace one motor cover for a new having the sensor fitted thereto.

As mentioned above, this solution may with advantage find application to a number of situations, such for example as relating to the automotive industry or the manufacture of small electro-domestic appliances, dispenser devices or the like, where the control of the speed or the position of a motor is a requirement.

Moreover, a motor according to this invention may be coupled to a logic circuit for scoring a number of preset positions, for example, the position of a motorcar seat, or one or more positions of a proportioning piston in a dispenser device, in which the actuator of the device is driven by means of an electric motor.

It should be apparent that the dimensions as well as the materials used may be varied depending on particular applications.

## Claims

1. An electric motor including an encoder comprising a Hall-effect sensor, characterized in that said sensor is arranged in the inside of the motor between the field poles of the stator.

2. The electric motor including an encoder comprising a Hall-effect sensor according to claim 1, wherein said encoder unit is capable of being connected and disconnected depending on as required.

3. The electric motor according to claims 1 and 2, wherein control of the revolutions and the position of the motor is performed by sensing the variation in magnetic flux as caused by rotation of field poles of the rotor.

4. The electric motor according to any preceding claim, wherein said sensor is mounted on a projection integral with a motor cover, said projection protruding into the inside of the motor frame between the field poles of the stator.

5. The electric motor according to claim 4, wherein a circuit for maintaining the correct polarity is provided on said projection supporting the Hall-effect sensor.

6. The electric motor according to any preceding claim, wherein a logic circuit is coupled to said motor for storing a plurality of positions of an actuator driven from said motor.

7. A proportioning apparatus charachterized in that the proportioning apparatus includes an actuator that is driven from an electric motor according to claims 1 to 6.

8. An actuator device for use in the automotive industry, wherein the actuator device is driven from a motor according to claims 1 to 6.

9. An electric motor including an encoder consisting of a Hall-effect sensor, wherein the system utilizes the variations in magnetic field resulting from rotation of field poles of the rotor to generate a series of pulses that are sensed by the Hall-effect sensor arranged between the field poles of the stator.

10. The electric motor as described herein before with reference to, and as shown in the accompanying drawings.
